# FASCICULE DE BREVET EUROPEEN

(11) **EP 3 759 001 B1**
(45) Date de publication et mention de la délivrance du brevet: **07.06.2023**
(21) Numéro de dépôt: 19710733.7
(22) Date de dépôt: 11.02.2019
(51) Int. Cl.: B60W 40/06, B60W 60/00, B60W 50/14, B60W 30/10, B60W 30/14

(54) **PROCÉDÉ ET DISPOSITIF D'ASSISTANCE À LA CONDUITE AUTOMATISÉE D'UN VÉHICULE À PROXIMITÉ DE ZONE(S) DE PASSAGE OBLIGÉ**
VERFAHREN UND VORRICHTUNG ZUR UNTERSTÜTZUNG DES AUTOMATISIERTEN FAHRENS EINES FAHRZEUGS NAHE EINES EINGESCHRÄNKTEN BEREICHS
METHOD AND DEVICE FOR ASSISTING THE AUTOMATED DRIVING OF A VEHICLE CLOSE TO A RESTRICTED AREA(S)

(30) Priorité: 01.03.2018 FR 1851790
(43) Date de publication de la demande: 06.01.2021
(73) Titulaire: PSA Automobiles SA, 78300 Poissy (FR)
(72) Inventeur: ETCHEVERRY, Celine, 91370 VERRIERES LE BUISSON (FR); LAYERLE, Jean-francois, 94320 THIAIS (FR); RIZZO, Audrey, 92150 SURESNES (FR); MONOT, Nolwenn, 78220 VIROFLAY (FR)
(86) Numéro de dépôt international: PCT/FR2019/050287
(87) Numéro de publication internationale: WO 2019/166714

(56) Documents cités:
- WO-A1-2017/178728
- DE-A1-102014 215 473
- FR-A1- 3 007 724
- US-A1- 2014 067 187
- US-A1- 2017 001 650
- US-B1- 8 996 228

## Description

L'invention concerne les véhicules à conduite automatisée (ou autonome), éventuellement de type automobile, et plus précisément les assistances à la conduite de tels véhicules.

Dans ce qui suit on entend par « véhicule à conduite automatisée », un véhicule pouvant être conduit de façon automatisée (partielle ou totale (sans intervention de son conducteur)) pendant une phase de conduite automatisée, ou de façon manuelle (et donc avec intervention de son conducteur sur le volant et/ou les pédales) pendant une phase de conduite manuelle.

Certains véhicules, généralement de type automobile, comprennent un dispositif d'assistance à la conduite (par exemple de type ADAS (« Advanced Driver Assistance System »)) qui est chargé de contrôler leur positionnement par rapport aux directions transversale et longitudinale (et donc par rapport à la voie de circulation empruntée) afin de permettre temporairement leur conduite de façon automatisée (ou autonome). Un tel dispositif d'assistance est donc capable de contrôler au moins partiellement la dynamique (direction, vitesse et accélération) de son véhicule en fonction de données d'environnement représentatives de véhicules, piétons, animaux, objets, panneaux de circulation et délimitations détectés par des moyens d'analyse embarqués.

Cependant ce type de dispositif d'assistance ne permet pas actuellement un contrôle de la conduite automatisée dans certaines situations de roulage, et en particulier lors du passage du véhicule au niveau d'une zone de passage obligé d'une voie de circulation, comme par exemple un péage de voie rapide ou de tunnel ou de pont ou encore de parking. Ainsi, lorsque le véhicule parvient au niveau d'une zone de passage obligé, son conducteur est systématiquement contraint de reprendre totalement son contrôle pour une question de sécurité, car son dispositif d'assistance n'est pas agencé pour contrôler le passage dans cette zone. On notera que cette contrainte existe tout autant lorsque la zone de passage obligé est dite automatisée du fait qu'elle permet un passage automatique contrôlé des véhicules qui sont autorisés à passer de façon contrôlée.

Cette impossibilité de contrôler la conduite autonome dans une aire comprenant des zones de passage obligé résulte du fait que les panneaux indicateurs installés en bord de voie de circulation, par exemple de type « halte péage », « ticket », « monnaie », « télépéage » sont très rarement identifiés, sont très variables en fonction des pays, et, pour certains d'entre eux, peuvent apparaitre très tardivement, ce qui ne permet pas au conducteur de disposer de suffisamment de temps pour reprendre correctement et sereinement le contrôle de son véhicule.

Il a certes été proposé, notamment dans le document brevet FR 3007724, d'utiliser des informations d'une cartographie pour détecter l'arrivée d'un véhicule à proximité de zones de passage obligé et faciliter son positionnement automatisé par rapport à l'une d'entre elles. Cependant, il n'existe pas actuellement de cartographie définissant toutes les zones de passage obligé de façon suffisamment précise et exhaustive. En outre, il arrive très fréquemment que des zones de passage obligé soient fermées temporairement, ce qui peut aboutir à la sélection d'une zone de passage obligé fermée. De plus, la fonction de positionnement par voie d'ondes (éventuellement par satellites (par exemple de type GPS)), qui permet de fournir la position en cours du véhicule à son dispositif d'assistance, ne fonctionne pas, ou fonctionne au mieux d'une façon imprécise qui est impropre à un guidage avec une précision de quelques centimètres, lorsque le véhicule est dans un lieu couvert (par exemple dans un parking de bâtiment ou un tunnel ou encore une station de péage munie d'un toit ou d'un auvent). Par ailleurs, de nombreux véhicules sont encore dépourvus de dispositif d'aide à la navigation et/ou de dispositif de positionnement par voie d'ondes.

On connait le document US 2017/001650 A1 qui décrit une proposition au conducteur d'une activation d'une fonctionnalité d'aide à la conduite en fonction des conditions extérieur. En présence d'une détermination que ledit véhicule est situé à proximité d'au moins une zone de passage obligé, il est proposé de générer au moins une alerte requérant que lesdits moyens de contrôle mettent en oeuvre une stratégie de conduite automatisée spécifique à la traversée de la zone de passage obligé.

On connait également le document US2014/067187 qui décrit une détection de zone de travaux.

L'invention a donc notamment pour but d'améliorer la situation.

Elle propose notamment à cet effet un procédé permettant d'assister la conduite d'un véhicule comprenant des moyens d'analyse analysant l'environnement dans au moins une zone située devant lui afin de détecter au moins des délimitations de voie(s) et des panneaux de circulation et de délivrer des données d'environnement représentatives de panneaux de circulation et délimitations détectées, et des moyens de contrôle contrôlant sa conduite de façon automatisée sur une voie de circulation définie par des délimitations en fonction de ces données d'environnement.

Ce procédé d'assistance comprend une étape dans laquelle :
- on analyse les données d'environnement afin de déterminer une variation de limitation de vitesse corrélée temporellement à une variation d'un nombre de voies de circulation, et
- en présence d'une telle détermination on considère que le véhicule est situé à proximité d'au moins une zone de passage obligé et on génère au moins une alerte requérant soit que le conducteur reprenne le contrôle de la conduite du véhicule pendant la traversée de cette zone de passage obligé, soit que les moyens de contrôle mettent en oeuvre une stratégie de conduite automatisée spécifique à la traversée de cette zone de passage obligé.

Selon l'invention, dans ladite étape on détermine une variation de limitation de vitesse corrélée temporellement à une variation du nombre de voies de circulation lorsque cette dernière intervient au milieu d'une réduction de la limitation de vitesse ou dans un intervalle de distances prédéfinies après un dernier panneau de limitation de vitesse.

Grâce à cette corrélation temporelle on peut désormais détecter précocement et de façon certaine l'arrivée du véhicule à proximité d'une aire de zone(s) de passage obligé, et alerter suffisamment à l'avance le conducteur ou les moyens de contrôle d'une prochaine traversée d'une zone de passage obligé.

Le procédé d'assistance selon l'invention peut comporter d'autres caractéristiques qui peuvent être prises séparément ou en combinaison, et notamment :
- dans son étape on peut déterminer une variation de limitation de vitesse en cas de détermination d'une séquence prédéfinie de panneaux de circulation définissant des limitations de vitesse différentes et espacés deux à deux de distances prédéfinies ;
- dans son étape, en présence de moyens d'analyse détectant également des véhicules et des rambardes de sécurité, on peut déterminer la variation du nombre de voies de circulation en fonction d'une variation d'un nombre de délimitations détectées et/ou d'une variation d'une distance entre le véhicule et au moins un véhicule détecté et/ou d'une variation d'une distance entre le véhicule et une rambarde de sécurité détectée ;
   > dans son étape, en présence de moyens d'analyse détectant également des véhicules circulant derrière une rambarde de sécurité selon un sens opposé à un sens de circulation du véhicule, on peut déterminer la variation du nombre de voies de circulation en fonction d'un nombre de voies de circulation détectées, dites opposées du fait que des véhicules circulent sur elles selon ce sens opposé ;
- dans son étape on peut stocker les données d'environnement déterminées successivement en correspondance d'instants d'acquisition, et on peut analyser les données d'environnement stockées dans une fenêtre glissante ;
- dans son étape, on peut considérer que le véhicule est sortie de la zone de passage obligé en cas de détermination d'une nouvelle variation de limitation de vitesse corrélée temporellement à une nouvelle variation d'un nombre de voies de circulation, et on peut générer au moins une autre alerte soit proposant que le conducteur cesse de contrôler la conduite du véhicule, soit requérant que les moyens de contrôle mettent en oeuvre une stratégie de conduite automatisée adaptée à des zones différentes des zones de passage obligé.

L'invention propose également un dispositif comprenant les caractéristiques de la revendication 7 destiné à assister un conducteur d'un véhicule comprenant des moyens d'analyse analysant l'environnement dans au moins une zone située devant lui afin de détecter au moins des délimitations de voie(s) et des panneaux de circulation et de délivrer des données d'environnement représentatives de panneaux de circulation et de délimitations détectées, et des moyens de contrôle contrôlant sa conduite de façon automatisée sur une voie de circulation définie par des délimitations en fonction de ces données d'environnement.

L'invention propose également un véhicule, éventuellement de type automobile, et comprenant les caractéristiques de la revendication 8.

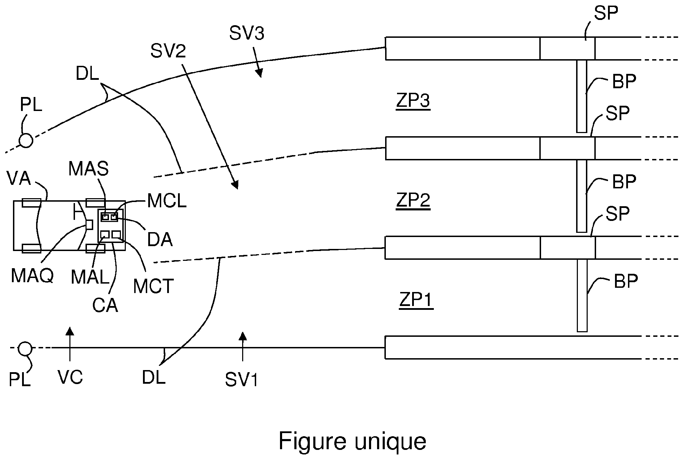

D'autres caractéristiques et avantages de l'invention apparaîtront à l'examen de la description détaillée ci-après, et du dessin annexé, sur lequel l'unique figure illustre schématiquement et fonctionnellement une voie de circulation se subdivisant en trois voies d'accès à des zones de passage obligé dans l'une desquelles s'apprête à circuler un véhicule à conduite automatisée et comprenant un calculateur muni d'un exemple de réalisation d'un dispositif d'assistance selon l'invention.

L'invention a notamment pour but de proposer un procédé d'assistance, et un dispositif d'assistance DA associé, destinés à assister la conduite d'un véhicule VA à conduite automatisée (ou autonome) sur une voie de circulation VC permettant d'accéder à au moins une zone de passage obligé ZPj.

Il est rappelé que l'on entend ici par « véhicule à conduite automatisée » un véhicule pouvant être conduit de façon automatisée (partielle ou totale (sans intervention de son conducteur)) pendant une phase de conduite automatisée, sous le contrôle (partiel ou total) d'un dispositif d'assistance, ou de façon manuelle (et donc sous le seul contrôle de son conducteur) pendant une phase de conduite manuelle.

Dans ce qui suit, on considère, à titre d'exemple non limitatif, que le véhicule VA est de type automobile. Il s'agit par exemple d'une voiture. Mais l'invention n'est pas limitée à ce type de véhicule. Elle concerne en effet tout type de véhicule à conduite automatisée (ou autonome) pouvant circuler sur des voies de circulation terrestres définies par des délimitations.

On a schématiquement et fonctionnellement représenté sur l'unique figure une voie de circulation VC se subdivisant en trois voies SVj (j = 1 à 3) permettant d'accéder respectivement à des zones de passage obligé ZPj. On notera que le nombre de voies d'accès SVj dans lesquelles se subdivise la voie de circulation VC peut prendre n'importe quelle valeur supérieure ou égale à deux (2). Par ailleurs, on pourrait avoir au moins deux voies de circulation VC se subdivisant en au moins trois voies d'accès SVj.

Dans cet exemple non limitatif un unique véhicule VA, à conduite automatisée et comprenant un calculateur CA muni d'un exemple de réalisation d'un dispositif d'assistance DA selon l'invention, circule sur la voie de circulation VC et s'apprête à emprunter l'une des voies d'accès SVj (ici la deuxième SV2).

La voie de circulation VC et les voies d'accès SVj sont définies chacune par deux délimitations DL.

On notera que dans l'exemple illustré non limitativement sur l'unique figure, la voie de circulation VC fait partie d'une voie rapide, et que les zones de passage obligé ZPj comprennent chacune une station de péage SP associée à une barrière BP. Mais les zones de passage obligé ZPj pourraient contrôler l'accès à d'autres lieux, comme par exemple un tunnel, un pont ou un parking.

Le véhicule VA étant à conduite automatisée, il comprend notamment un volant, des moyens d'acquisition MAQ, des moyens d'analyse MAL et des moyens de contrôle MCT, en complément de son dispositif d'assistance DA selon l'invention.

Bien que cela n'apparaisse pas sur l'unique figure, le volant est solidarisé fixement à une colonne de direction, afin de permettre au conducteur de la contrôler en exerçant sur elle un couple avec l'une au moins de ses mains pendant une phase de conduite manuelle ou partiellement automatisée. Cette colonne de direction est couplée à un automate de contrôle de direction (non représenté) contrôlable au moyen d'une consigne, par exemple de couple d'assistance.

Les moyens d'analyse MAL sont agencés de manière à analyser l'environnement dans au moins une zone située devant le véhicule VA afin de détecter au moins des délimitations DL de voie(s) et des panneaux de circulation PL et de délivrer des données d'environnement qui sont représentatives de ces panneaux de circulation PL et délimitations DL détectées et de leurs positions relatives respectives par rapport au véhicule VA (à une position considérée). On notera que ces données d'environnement peuvent être également et notamment représentatives de véhicules, piétons, animaux, objets, et rambardes de sécurité, et d'éventuels attributs qui décrivent ces derniers. Un attribut peut, par exemple, être un paramètre cinématique, des dimensions, une forme, un type, ou une probabilité d'existence. Un paramètre cinématique peut, par exemple, être une position par rapport au véhicule VA, la direction (ou le cap), la vitesse relative par rapport au véhicule VA, et l'accélération relative par rapport au véhicule VA.

L'environnement analysé par les moyens d'analyse MAL est défini par des données acquises par les moyens d'acquisition MAQ équipant le véhicule VA. Ces moyens d'acquisition MAQ comprennent au moins une caméra numérique orientée vers l'avant du véhicule VA et chargée d'acquérir des images de la zone située devant ce dernier (VA). On notera que les moyens d'acquisition MAQ peuvent également comprendre, en complément, au moins une autre caméra numérique et/ou au moins un capteur à ultrasons et/ou au moins un laser de balayage et/ou au moins un radar ou lidar.

Par exemple, les panneaux de circulation PL et délimitations DL peuvent être détectés par reconnaissance de forme, et leurs positions peuvent être définies par rapport à un référentiel rattaché au véhicule VA à la position considérée. Les délimitations DL peuvent, par exemple, être modélisées par les moyens d'analyse MAL par des polynômes mathématiques, avec comme référence un point du véhicule VA.

Dans l'exemple illustré non limitativement sur l'unique figure, les moyens d'analyse MAL font partie du calculateur CA qui comprend également le dispositif d'assistance DA. Mais cela n'est pas obligatoire. En effet, les moyens d'analyse MAL pourraient faire partie d'un autre calculateur que le calculateur CA, ou bien pourraient comprendre leur propre calculateur. Par ailleurs, ces moyens d'analyse MAL pourraient éventuellement faire partie du dispositif d'assistance DA. Par conséquent, les moyens d'analyse MAL peuvent être réalisés sous la forme de modules logiciels (ou informatiques ou encore « software »), ou d'une combinaison de circuits ou composants électriques ou électroniques (ou « hardware ») et de modules logiciels.

Les moyens de contrôle MCT sont agencés de manière à contrôler la conduite du véhicule VA de façon automatisée sur une voie de circulation VC ou SVj en fonction des données d'environnement déterminées par les moyens d'analyse MAL. Ils constituent éventuellement ce que l'homme de l'art appelle un dispositif ADAS (« Advanced Driver Assistance System » - système d'assistance (ou d'aide) à la conduite avancée).

Ces moyens de contrôle MCT sont donc agencés de manière à contrôler, pendant une phase de conduite au moins partiellement automatisée, le positionnement du véhicule VA par rapport à la direction transversale (et donc par rapport aux délimitations DL) et à la direction longitudinale. Par conséquent, ils contrôlent au moins partiellement la dynamique (direction, vitesse et accélération) du véhicule VA en fonction de données d'environnement fournies par les moyens d'analyse MAL. A cet effet, ils génèrent notamment la consigne de l'automate de contrôle de direction.

Dans l'exemple illustré non limitativement sur l'unique figure, les moyens de contrôle MCT font partie du calculateur CA qui comprend également le dispositif d'assistance DA. Mais cela n'est pas obligatoire. En effet, les moyens de contrôle MCT pourraient faire partie d'un autre calculateur que le calculateur CA, ou bien pourraient comprendre leur propre calculateur. Par ailleurs, le dispositif d'assistance DA pourrait éventuellement faire partie des moyens de contrôle MCT. Par conséquent, les moyens de contrôle MCT peuvent être réalisés sous la forme de modules logiciels, ou d'une combinaison de circuits ou composants électriques ou électroniques et de modules logiciels.

Comme évoqué précédemment, l'invention propose un procédé d'assistance destiné, notamment, à assister la conduite du véhicule VA lorsque ce dernier (VA) se retrouve situé à proximité de zone(s) de passage obligé ZPj.

Un procédé d'assistance, selon l'invention, comprend une étape qui peut être mise en oeuvre au moyen d'un dispositif d'assistance DA équipant le véhicule VA.

Comme illustré sur l'unique figure un dispositif d'assistance DA, selon l'invention, comprend des moyens de calcul MCL et des moyens d'assistance MAS.

Dans l'étape du procédé on commence par analyser les données d'environnement déterminées par les moyens d'analyse MAL afin de déterminer une variation de limitation de vitesse corrélée temporellement à une variation d'un nombre de voies de circulation. Cette analyse est réalisée par les moyens de calcul MCL du dispositif d'assistance DA.

La détection d'une variation négative de limitation de vitesse est un premier indice d'arrivée à proximité de zone(s) de passage obligé ZPj. La détection de la subdivision d'au moins une voie de circulation VC en au moins deux voies d'accès SVj est un second indice d'arrivée à proximité de zone(s) de passage obligé ZPj. La détection de ces deux indices sensiblement simultanément est une preuve d'arrivée à proximité de zone(s) de passage obligé ZPj.

Par exemple, on peut déterminer une variation de limitation de vitesse corrélée temporellement à une variation du nombre de voies de circulation lorsque cette dernière intervient au milieu d'une réduction de la limitation de vitesse ou dans un intervalle de distances prédéfinies après un dernier panneau de limitation de vitesse PL. Cet intervalle de distances peut, par exemple, s'étendre sur une longueur comprise entre 300 mètres et 600 mètres après le dernier panneau de limitation de vitesse PL avant une zone de passage obligé ZPj. Ainsi, cette longueur peut être choisie égale à 500 mètres.

L'étape du procédé se poursuit lorsqu'une corrélation temporelle a été déterminée. Dans ce cas, on considère (ou décide) que le véhicule VA est situé à proximité d'au moins une zone de passage obligé ZPj et on génère au moins une alerte requérant soit que le conducteur du véhicule VA reprenne le contrôle de la conduite de ce dernier (VA) pendant la traversée de cette zone de passage obligé ZPj, soit que les moyens de contrôle MCT mettent en oeuvre une stratégie de conduite automatisée spécifique à la traversée de cette zone de passage obligé ZPj. Cette considération (ou décision) et cette génération d'alerte(s) sont réalisées par les moyens d'assistance MAS du dispositif d'assistance DA.

La corrélation temporelle permet de détecter de façon certaine l'arrivée du véhicule VA à proximité d'une aire contenant au moins une zone de passage obligé ZPj, et d'alerter suffisamment à l'avance le conducteur pour qu'il reprenne correctement et sereinement le contrôle du véhicule VA ou bien les moyens de contrôle MCT pour qu'ils puissent mettre en oeuvre une stratégie de conduite automatisée parfaitement adaptée à la traversée de la zone de passage obligé ZPj.

Le destinataire de l'alerte dépend du type et/ou de la configuration des moyens de contrôle MCT équipant le véhicule VA. Ainsi, lorsque les moyens de contrôle MCT ne sont pas agencés de manière à mettre en oeuvre une stratégie de conduite automatisée spécifique à la traversée d'une zone de passage obligé ZPj, c'est le conducteur qui est alerté. En revanche, lorsque les moyens de contrôle MCT sont agencés de manière à mettre en oeuvre une stratégie de conduite automatisée spécifique à la traversée d'une zone de passage obligé ZPj, ce sont les moyens de contrôle MCT qui sont alertés (éventuellement avec en complément un message d'information à destination du conducteur). On peut également envisager que les moyens de contrôle MCT soient agencés de manière à mettre en oeuvre une stratégie de conduite automatisée spécifique à la traversée d'une zone de passage obligé ZPj mais qu'ils soient temporairement dans l'impossibilité de le faire (éventuellement parce que le conducteur n'a pas sélectionné cette option de configuration). Dans ce dernier cas c'est le conducteur qui est alerté.

On notera que dans l'étape du procédé on peut déterminer une variation de limitation de vitesse en cas de détermination d'une séquence prédéfinie de panneaux de circulation PL définissant des limitations de vitesse différentes et espacés deux à deux de distances prédéfinies. L'objectif est en effet de rechercher des enchainements de réductions de vitesse, par exemple de 20 km/h, en partant de la limitation de vitesse appliquée sur la voie de circulation VC avant la première réduction. Cela permet en effet de détecter des séquences typiques représentatives de zones de passage obligé ZPj, comme par exemple 130 km/h - 110 km/h - 90 km/h, ou 130 km/h - 110 km/h - 90 km/h - 70 km/h, ou 110 km/h - 90 km/h - 70 km/h, ou 120 km/h - 100 km/h - 80 km/h, ou 120 km/h - 100 km/h - 80 km/h - 60 km/h, ou encore 100 km/h - 80 km/h - 60 km/h.

On notera également que dans l'étape du procédé, lorsque les moyens d'analyse MAL sont aussi capables de détecter des véhicules et des rambardes de sécurité, on peut déterminer la variation du nombre de voies de circulation VC ou SVj en fonction d'une variation du nombre de délimitations DL détectées et/ou d'une variation de la distance entre le véhicule VA et au moins un véhicule détecté et/ou d'une variation de la distance entre le véhicule VA et une rambarde de sécurité détectée. Ces variations sont déterminées par les moyens de calcul MCL.

En présence de cette dernière option, lorsque les moyens d'analyse MAL sont aussi capables de détecter des véhicules qui circulent derrière une rambarde de sécurité selon un sens opposé au sens de circulation du véhicule VA, on peut déterminer la variation du nombre de voies de circulation en fonction du nombre de voies de circulation détectées, dites opposées du fait que des véhicules circulent sur elles selon ce sens opposé. Cette variation est déterminée par les moyens de calcul MCL.

Par exemple, lorsque les moyens d'analyse MAL ont détecté N voies d'accès SVj, parmi lesquelles N1 sont dédiées au sens de circulation du véhicule VA et N2 sont dédiées au sens de circulation opposé à celui du véhicule VA, avec N = N1 + N2, les moyens de calcul MCL ne prennent en considération que les N1 voies d'accès SVj pour déterminer la variation du nombre de voies de circulation.

On notera également que dans l'étape du procédé on peut stocker dans des moyens de stockage du dispositif d'assistance DA les données d'environnement déterminées successivement en correspondance d'instants d'acquisition, et on peut analyser les données d'environnement stockées dans une fenêtre glissante. Cette fenêtre glissante peut être temporelle ou spatiale. Dans ce cas, on supprime au fur et à mesure de leur analyse les « plus anciennes » (dans le temps ou dans l'espace) données d'environnement stockées afin de ne pas surcharger les moyens de stockage avec des données d'environnement devenues inutiles. Ce stockage et cette suppression peuvent être contrôlés par les moyens de calcul MCL. Par ailleurs, les moyens de stockage peuvent faire éventuellement partie des moyens de calcul MCL et peuvent se présenter sous toute forme connue de l'homme de l'art. Au lieu de stocker les définitions de toutes les délimitations DL à l'instant considéré, on peut stocker le nombre de voies de circulation déterminées à l'instant considéré à partir de ces délimitations DL déterminées, et inversement.

On notera également que dans l'étape du procédé on peut considérer (ou décider) que le véhicule VA est sorti de la zone de passage obligé ZPj en cas de détermination d'une nouvelle variation de limitation de vitesse corrélée temporellement à une nouvelle variation du nombre de voies de circulation SVj et VC. Cette sortie de la zone de passage obligé ZPj correspond à une situation sensiblement symétrique de celle illustrée sur l'unique figure (à savoir, ici, une réduction du nombre de voies de circulation SVj accompagnée d'une augmentation de la limitation de vitesse. Dans ce cas, on (les moyens d'assistance MAS) génère(nt) au moins une autre alerte soit proposant que le conducteur cesse de contrôler la conduite du véhicule VA, soit requérant que les moyens de contrôle MCT mettent en oeuvre une stratégie de conduite automatisée adaptée à des zones différentes des zones de passage obligé (ZPj), et donc non spécifique à ces dernières (ZPj).

La détection d'une variation positive de limitation de vitesse est un premier indice de sortie d'une zone de passage obligé ZPj. La détection de la fusion d'au moins deux voies d'accès SVj en au moins une voie de circulation VC est un second indice de sortie d'une zone de passage obligé ZPj. La détection de ces deux indices sensiblement simultanément est une preuve de sortie d'une zone de passage obligé ZPj.

Chaque alerte du conducteur peut se faire au moyen d'un message textuel affiché sur au moins un écran du véhicule VA, par exemple celui du tableau de bord ou celui du combiné central installé dans ou sur la planche de bord, et/ou d'un message sonore diffusé par au moins un haut-parleur du véhicule VA et/ou d'une action haptique, par exemple en faisant vibrer le volant et/ou le siège du conducteur.

On notera également que dans l'exemple illustré non limitativement sur l'unique figure, le dispositif d'assistance DA est implanté dans le calculateur CA qui peut éventuellement assurer au moins une autre fonction. Mais il (DA) pourrait comprendre un calculateur. Par conséquent, un dispositif d'assistance DA peut être réalisé sous la forme de modules logiciels, ou d'une combinaison de circuits ou composants électriques ou électroniques et de modules logiciels.

## Revendications

1. Procédé d'assistance à la conduite d'un véhicule (VA) comprenant des moyens d'analyse (MAL) analysant l'environnement dans au moins une zone située devant ledit véhicule (VA) afin de détecter au moins des délimitations de voie(s) et des panneaux de circulation et de délivrer des données d'environnement représentatives desdits panneaux de circulation et délimitations détectées, et des moyens de contrôle (MCT) contrôlant sa conduite de façon automatisée sur une voie de circulation (VC, SVj) définie par des délimitations en fonction desdites données d'environnement, **caractérisé en ce qu'**il comprend une étape dans laquelle i) on analyse lesdites données d'environnement afin de déterminer une variation de limitation de vitesse corrélée temporellement à une variation d'un nombre de voies de circulation, et ii) en présence d'une telle détermination on considère que ledit véhicule (VA) est situé à proximité d'au moins une zone de passage obligé (ZPj) et on génère au moins une alerte requérant soit qu'un conducteur dudit véhicule (VA) reprenne le contrôle de la conduite de ce dernier (VA) pendant la traversée de cette zone de passage obligé (ZPj), soit que lesdits moyens de contrôle (MCT) mettent en oeuvre une stratégie de conduite automatisée spécifique à la traversée de cette zone de passage obligé (ZPj), **caractérisé en ce que** dans ladite étape on détermine une variation de limitation de vitesse corrélée temporellement à une variation du nombre de voies de circulation lorsque cette dernière intervient au milieu d'une réduction de la limitation de vitesse ou dans un intervalle de distances prédéfinies après un dernier panneau de limitation de vitesse.

2. Procédé selon la revendication 1, **caractérisé en ce que** dans ladite étape on détermine une variation de limitation de vitesse en cas de détermination d'une séquence prédéfinie de panneaux de circulation définissant des limitations de vitesse différentes et espacés deux à deux de distances prédéfinies.

3. Procédé selon l'une des revendications 1 à 2, **caractérisé en ce que** dans ladite étape, en présence de moyens d'analyse (MAL) détectant également des véhicules et des rambardes de sécurité, on détermine ladite variation du nombre de voies de circulation en fonction d'une variation d'un nombre de délimitations détectées et/ou d'une variation d'une distance entre ledit véhicule (VA) et au moins un véhicule détecté et/ou d'une variation d'une distance entre ledit véhicule (VA) et une rambarde de sécurité détectée.

4. Procédé selon la revendication 3, **caractérisé en ce que** dans ladite étape, en présence de moyens d'analyse (MAL) détectant également des véhicules circulant derrière une rambarde de sécurité selon un sens opposé à un sens de circulation dudit véhicule (VA), on détermine ladite variation du nombre de voies de circulation en fonction d'un nombre de voies de circulation détectées, dites opposées du fait que des véhicules circulent sur elles selon ledit sens opposé.

5. Procédé selon l'une des revendications 1 à 4, **caractérisé en ce que** dans ladite étape on stocke lesdites données d'environnement déterminées successivement en correspondance d'instants d'acquisition et on analyse les données d'environnement stockées dans une fenêtre glissante.

6. Procédé selon l'une des revendications 1 à 5, **caractérisé en ce que** dans ladite étape, on considère que ledit véhicule (VA) est sorti de ladite zone de passage obligé (ZPj) en cas de détermination d'une nouvelle variation de limitation de vitesse corrélée temporellement à une nouvelle variation d'un nombre de voies de circulation, et on génère au moins une autre alerte soit proposant que ledit conducteur cesse de contrôler la conduite dudit véhicule (VA), soit requérant que lesdits moyens de contrôle (MCT) mettent en oeuvre une stratégie de conduite automatisée adaptée à des zones différentes des zones de passage obligé.

7. Dispositif d'assistance (DA) pour assister la conduite d'un véhicule (VA) comprenant des moyens d'analyse (MAL) analysant l'environnement dans au moins une zone située devant ledit véhicule (VA) afin de détecter au moins des délimitations de voie(s) et des panneaux de circulation et de délivrer des données d'environnement représentatives desdits panneaux de circulation et délimitations détectées, et des moyens de contrôle (MCT) contrôlant sa conduite de façon automatisée sur une voie de circulation (VC, SVj) définie par des délimitations en fonction desdites données d'environnement, le dispositif d'assistance comprenant i) des moyens de calcul (MCL) analysant lesdites données d'environnement afin de déterminer une variation de limitation de vitesse corrélée temporellement à une variation d'un nombre de voies de circulation lorsque cette dernière intervient au milieu d'une réduction de la limitation de vitesse ou dans un intervalle de distances prédéfinies après un dernier panneau de limitation de vitesse, et ii) des moyens d'assistance (MAS) décidant, en présence d'une telle détermination, que ledit véhicule (VA) est situé à proximité d'au moins une zone de passage obligé (ZPj) et générant au moins une alerte requérant soit qu'un conducteur dudit véhicule (VA) reprenne le contrôle de la conduite de ce dernier (VA) pendant la traversée de cette zone de passage obligé (ZPj), soit que lesdits moyens de contrôle (MCT) mettent en oeuvre une stratégie de conduite automatisée spécifique à la traversée de cette zone de passage obligé (ZPj).

8. Véhicule (VA) comprenant le dispositif d'assistance (DA) selon la revendication 7.

9. Véhicule selon la revendication 8, **caractérisé en ce qu'**il est de type automobile.

## Patentansprüche

1. Verfahren zur Unterstützung des Fahrens eines Fahrzeugs (VA) mit Analysemitteln (MAL), die die Umgebung in mindestens einem Bereich vor dem Fahrzeug (VA) analysieren, um mindestens Begrenzungen der Fahrspur(en) und Verkehrsschilder zu erfassen und Umgebungsdaten zu liefern, die für die erfassten Verkehrsschilder und Begrenzungen repräsentativ sind, und Steuermittel (MCT), die sein Fahren auf automatisierte Weise auf einer durch Begrenzungen definierten Fahrspur (VC, SVj) in Abhängigkeit von den Umgebungsdaten steuern, **dadurch gekennzeichnet, dass** es einen Schritt umfasst, in dem i) die Umgebungsdaten analysiert werden, um eine Variation der Geschwindigkeitsbegrenzung zu bestimmen, die zeitlich mit einer Variation einer Anzahl von Fahrspuren korreliert ist, und ii) bei Vorliegen einer solchen Bestimmung davon ausgegangen wird, dass sich das Fahrzeug (VA) in der Nähe mindestens einer Zwangsdurchfahrtszone (ZPj) befindet, und mindestens ein Alarm erzeugt wird, der entweder erfordert, dass ein Fahrer des Fahrzeugs (VA) die Kontrolle über die Steuerung des Fahrzeugs (VA) während der Durchfahrt durch diese Zwangsdurchfahrtszone (ZPj) wiedererlangt, oder dass die Kontrollmittel (MCT) eine automatisierte Fahrstrategie umsetzen, die spezifisch für die Durchquerung dieser Zwangsdurchfahrtszone (ZPj) ist, **dadurch gekennzeichnet, dass** in dem Schritt eine Änderung der Geschwindigkeitsbegrenzung bestimmt wird, die zeitlich mit einer Änderung der Anzahl der Fahrspuren korreliert, wenn letztere in der Mitte einer Verringerung der Geschwindigkeitsbegrenzung oder in einem Intervall von vordefinierten Abständen nach einem letzten Schild zur Geschwindigkeitsbegrenzung auftritt.

2. Verfahren nach Anspruch 1, **dadurch gekennzeichnet, dass** in dem Schritt eine Änderung der Geschwindigkeitsbegrenzung bestimmt wird, wenn eine vordefinierte Folge von Verkehrsschildern bestimmt wird, die unterschiedliche Geschwindigkeitsbegrenzungen definieren und paarweise in vordefinierten Abständen angeordnet sind.

3. Verfahren nach einem der Ansprüche 1 bis 2, **dadurch gekennzeichnet, dass** in dem Schritt bei Vorhandensein von Analysemitteln (MAL), die auch Fahrzeuge und Sicherheitsgeländer erfassen, die Variation der Anzahl von Fahrspuren in Abhängigkeit von einer Variation einer Anzahl von erfassten Begrenzungen und/oder einer Variation eines Abstands zwischen dem Fahrzeug (VA) und mindestens einem erfassten Fahrzeug und/oder einer Variation eines Abstands zwischen dem Fahrzeug (VA) und einem erfassten Sicherheitsgeländer bestimmt wird.

4. Verfahren nach Anspruch 3, **dadurch gekennzeichnet, dass** in diesem Schritt bei Vorhandensein von Analysemitteln (MAL), die auch Fahrzeuge erfassen, die hinter einer Sicherheitsreling in einer Richtung fahren, die einer Fahrtrichtung des Fahrzeugs (VA) entgegengesetzt ist, die Veränderung der Anzahl der Fahrspuren in Abhängigkeit von einer Anzahl von erfassten Fahrspuren bestimmt wird, die aufgrund der Tatsache, dass Fahrzeuge auf ihnen in der entgegengesetzten Richtung fahren, als entgegengesetzt bezeichnet werden.

5. Verfahren nach einem der Ansprüche 1 bis 4, **dadurch gekennzeichnet, dass** in diesem Schritt die nacheinander bestimmten Umgebungsdaten in Entsprechung zu Erfassungszeitpunkten gespeichert werden und die gespeicherten Umgebungsdaten in einem gleitenden Fenster analysiert werden.

6. Verfahren nach einem der Ansprüche 1 bis 5, **dadurch gekennzeichnet, dass** in dem Schritt davon ausgegangen wird, dass das Fahrzeug (VA) die Zwangsdurchfahrtszone (ZPj) verlassen hat, wenn eine neue Änderung der Geschwindigkeitsbegrenzung bestimmt wird, die zeitlich mit einer neuen Änderung einer Anzahl von Fahrspuren korreliert, und mindestens eine weitere Warnung erzeugt wird, die entweder vorschlägt, dass der Fahrer aufhört, die Steuerung des Fahrzeugs (VA) zu kontrollieren, oder verlangt, dass die Steuermittel (MCT) eine automatisierte Fahrstrategie umsetzen, die an andere Zonen als die Zwangsdurchfahrtszonen angepasst ist.

7. Hilfsvorrichtung (DA) zur Unterstützung des Fahrens eines Fahrzeugs (VA), umfassend Analysemittel (MAL), die die Umgebung in mindestens einem vor dem Fahrzeug (VA) liegenden Bereich analysieren, um mindestens Fahrspurbegrenzungen und Verkehrsschilder zu erfassen und Umgebungsdaten zu liefern, die für die erfassten Verkehrsschilder und Begrenzungen repräsentativ sind, und Steuermittel (MCT), die sein Fahren auf automatisierte Weise auf einer durch Begrenzungen definierten Fahrspur (VC, SVj) in Abhängigkeit von den Umgebungsdaten steuern, die Hilfsvorrichtung umfasst i) Berechnungsmittel (MCL), die die Umgebungsdaten analysieren, um eine Änderung der Geschwindigkeitsbegrenzung zu bestimmen, die zeitlich mit einer Änderung einer Anzahl von Fahrspuren korreliert, wenn letztere in der Mitte einer Verringerung der Geschwindigkeitsbegrenzung oder innerhalb eines Intervalls von vordefinierten Abständen nach einem letzten Schild mit Geschwindigkeitsbegrenzung auftritt, und ii) Hilfsmittel (MAS), die entscheiden, bei Vorliegen einer solchen Bestimmung, dass sich das Fahrzeug (VA) in der Nähe mindestens einer Zwangszone (ZPj) befindet, und mindestens eine Warnung erzeugt, die entweder verlangt, dass ein Fahrer des Fahrzeugs (VA) die Kontrolle über das Fahren des Fahrzeugs (VA) während der Durchfahrt durch diese Zwangszone (ZPj) übernimmt, oder dass die Steuermittel (MCT) eine automatisierte Fahrstrategie umsetzen, die für die Durchfahrt durch diese Zwangszone (ZPj) spezifisch ist.

8. Fahrzeug (VA) mit der Assistenzeinrichtung (DA) nach Anspruch 7.

9. Fahrzeug nach Anspruch 8, **dadurch gekennzeichnet, dass** es ein Automobil ist.

## Claims

1. Method for assisting the driving of a vehicle (VA) comprising analysis means (MAL) analysing the environment in at least one zone located in front of said vehicle (VA) in order to detect at least lane delimitations and traffic signs and to deliver environment data representative of said detected traffic signs and delimitations and control means (MCT) controlling its driving in an automated manner on a traffic lane (VC, SVj) defined by delimitations as a function of said environment data, **characterised in that** it comprises a step in which i) said environment data is analysed in order to determine a variation in speed limitation correlated temporally to a variation in a number of traffic lanes and ii) in the presence of such a determination, it is considered that the said vehicle (VA) is located in the vicinity of at least one compulsory passage zone (ZPj) and at least one alert is generated, requiring either that a driver of the said vehicle (VA) regain control of the driving of the latter (VA) during the crossing of this compulsory passage zone (ZPj) or that the said control means (MCT) implement an automated driving strategy specific to the crossing of this compulsory passage zone (ZPj), **characterised in that** in the said step a variation in speed limit correlated temporally to a variation in the number of traffic lanes is determined when the latter occurs in the middle of a reduction in the speed limit or in an interval of predefined distances after a last speed limit sign.

2. The method according to claim 1, **characterized in that** in said step a speed limit variation is determined in case of determination of a predefined sequence of traffic signs defining different speed limits and spaced two by two by predefined distances.

3. Method according to one of claims 1 to 2, **characterized in that** in said step, in the presence of analysis means (MAL) also detecting vehicles and guardrails, said variation of the number of traffic lanes is determined as a function of a variation of a number of detected delimitations and/or a variation of a distance between said vehicle (VA) and at least one detected vehicle and/or a variation of a distance between said vehicle (VA) and a detected guardrail

4. Method according to claim 3, **characterised in that** in said step, in the presence of analysis means (MAL) also detecting vehicles travelling behind a guardrail in a direction opposite to a direction of travel of said vehicle (VA), said variation in the number of traffic lanes is determined as a function of a number of detected traffic lanes, said opposite traffic lanes being said traffic lanes having vehicles travelling on them in said opposite direction.

5. A method according to any of claims 1 to 4, **characterized in that** in said step said determined environment data is stored successively in correspondence of acquisition times and the stored environment data is analyzed in a sliding window.

6. Method according to one of claims 1 to 5, **characterized in that** in said step said vehicle (VA) is considered to have left said required passage zone (ZPj) in case of determination of a new variation of speed limitation temporally correlated to a new variation of a number of traffic lanes, and at least another alert is generated either proposing that said driver ceases to control the driving of said vehicle (VA) or requiring that said control means (MCT) implement an automated driving strategy adapted to zones different from the required passage zones.

7. An assistance device (DA) for assisting the driving of a vehicle (VA) comprising analysis means (MAL) analysing the environment in at least one zone located in front of said vehicle (VA) in order to detect at least lane(s) delimitations and traffic signs and to deliver environment data representative of said detected traffic signs and delimitations, and control means (MCT) controlling its driving in an automated way on a traffic lane (VC, SVj) defined by delimitations according to said environment data, **characterized in that** the assisting device comprising i) computing means (MCL) analysing said environmental data in order to determine a speed limit variation temporally correlated to a variation of a number of traffic lanes when the latter occurs in the middle of a speed limit reduction or within a predefined distance interval after a last speed limit sign, and ii) assisting means (MAS) deciding whether or not the driver is able to drive in a lane (VC, SVj), (ii) assistance means (MAS) deciding, in the presence of such a determination, that the said vehicle (VA) is located in the vicinity of at least one required passage zone (ZPj) and generating at least one alert requiring either that a driver of the said vehicle (VA) resume control of the driving of the latter (VA) during the crossing of this required passage zone (ZPj), or that the said control means (MCT) implement an automated driving strategy specific to the crossing of this required passage zone (ZPj).

8. Vehicle (VA) comprising the assistance device (DA) according to claim 7.

9. Vehicle according to claim 8, **characterised in that** it is of the automobile type.
